# EUROPÄISCHE PATENTANMELDUNG

(11) **EP 1 201 470 A2**
(43) Veröffentlichungstag der Anmeldung: **02.05.2002**
(21) Anmeldenummer: 01122915.0
(22) Anmeldetag: 25.09.2001
(51) Int. Cl.: B60G 17/00

(54) **Hebevorrichtung für die Räder eines Anhängers**

(30) Priorität: 26.10.2000 DE 10053455
(71) Anmelder: DEERE & COMPANY, Moline, Illinois 61265-8098 (US)
(72) Erfinder: Guiet, Lionel, 70100 Gray (FR)
(74) Vertreter: Magin, Ludwig Bernhard

(57) **Zusammenfassung**

1. Gezogenes Gerät
2.1. Bekannte gezogene Geräte weisen ein Fahrgestell auf, das sich über Räder und diese tragende Radaufhängungen auf dem Boden abstützt. Zwischen dem Fahrgestell und den Radaufhängungen sind Federungsvorrichtungen vorgesehen, die während des Betriebs auftretende Stöße auffangen. Bisher bekannt gewordene Ausführungsformen der Federungsvorrichtungen haben den Nachteil, daß sich die beim Auftreffen auf ein Hindernis gespeicherte Energie abrupt entladen und Schäden verursachen kann.
2.2. Es wird ein gezogenes Gerät (10) vorgeschlagen, dessen Federungsvorrichtung (18) eine Dämpfungsvorrichtung (48) zugeordnet ist.
2.3. Derartige gezogenen Geräte (10) werden in der Landwirtschaft eingesetzt.

## Beschreibung

Die Erfindung betrifft ein gezogenes Gerät mit einem Fahrgestell, wenigstens einer Radaufhängung, einer Federungsvorrichtung und einer Stellvorrichtung.

Die DE-A1-31 39 936 offenbart ein gezogenes landwirtschaftliches Gerät mit einem Fahrgestell, an dessen beiden seitlichen Endbereichen jeweils eine Radaufhängung vorgesehen ist. Beide Radaufhängungen weisen im Bereich ihrer Schwenkachse eine Welle auf, die an den einander zugelegenen Enden über einen federbelasteten Lenker relativ beweglich zueinander miteinander verbunden sind. Eine Stellvorrichtung kann in einer Richtung mit Anschlägen an den Radaufhängungen in Eingriff gebracht werden und diese in eine Richtung verstellen.

Aus der EP-A1-0 149 870 geht ein gezogenes Mähgerät hervor, bei dem eine Stellvorrichtung und eine Federungsvorrichtung in Reihe zueinander geschaltet sind. In einem der dort gezeigten Ausführungsbeispiele wirkt ein Stellzylinder auf eine Schwenkwelle, die an den jeweiligen Endbereich, über mit Gasdruckfedern bestückte Streben, Radschwingen vertikal verschwenkt.

Das der Erfindung zugrundeliegende Problem wird darin gesehen, daß die bekannten Federungsvorrichtungen beim Auftreffen auf ein Hindernis sehr viel Energie aufnehmen und nach der Überwindung des Hindernisses im Falle geringer Gegenkräfte sich abrupt entladen und somit die Stellvorrichtung beschädigen können, insbesondere den Kolben gegen das Ende des Zylindergehäuses oder gegen eine innere Schulter schlagen.

Dieses Problem wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Auf diese Weise wird die Bewegung der Stellvorrichtung im unbelasteten Zustand von der Dämpfungsvorrichtung gehemmt, sodaß z. B. ein Hydraulikkolben nicht gegen den Boden des Zylindergehäuses anschlagen und dieses beschädigen kann. Bei anderen Ausführungsformen wird verhindert, daß ein Lenker auf einen Anschlag aufschlägt und Schäden hervorruft, daß eine bewegte Radaufhängung zu sehr beschleunigt wird und sich daraufhin verbiegt, etc.

Da ein Stellmotor mit einem Kolben in einem Zylindergehäuse gegen Schäden an der Gleitfläche oder an Dichtungen sehr empfindlich ist, ist die Wirkung der Erfindung dort sehr groß und führt zu einer erheblichen Schadensminderung. Dies gilt sowohl bei hydraulisch wie auch bei pneumatisch betriebenen Stellmotoren.

Unter der Vielzahl von Varianten, die für eine Dämpfung gewählt werden können, werden Spiralfedern, Gasdruckspeicher und gummiartige Körper bevorzugt, weil sie kostengünstig und marktgängig sind. So kann eine Spiral- oder Tellerfeder um eine Kolbenstange in einem Zylindergehäuse angeordnet werden, ein Gasdruckspeicher kann an eine zweite Kolbenkammer angeschlossen werden, oder zwischen das Ende eines Zylindergehäuses und den Kolben kann eine Gummi- oder Kautschukmasse in der Form eines Ringes oder dergleichen eingefügt werden.

Ein Kolben in einem Zylindergehäuse hat den Vorteil, daß er zwei Anlageflächen darbietet, die für die Beaufschlagung durch die Federungsvorrichtung einerseits und die Dämpfungsvorrichtung andererseits geeignet sind.

Eine Teileoptimierung findet statt, wenn zwischen der Stellvorrichtung und der Radaufhängung ein Umlenkglied mit einer Schwenkachse vorgesehen ist, wobei die Stellvorrichtung einerseits und die Radaufhängung andererseits der Schwenkachse an dem Umlenkglied schwenkbar angreift, weil dadurch die Federungsvorrichtung gleichzeitig als Dämpfungsglied wirken kann. In diesem Fall wird nämlich die Federungsvorrichtung stets in der gleichen Richtung beaufschlagt, sobald das Umkehrglied aus einer Neutrallage heraustritt.

Es liegt zwar auch im Rahmen der Erfindung, daß das Umkehrglied direkt an der Radaufhängung angreift; um bestehende geometrische Erfordernisse erfüllen zu können, ist es jedoch vorteilhaft, eine Strebe zwischen das Umkehrglied und die Radaufhängung einzuführen. Wenn die Kraftlinien der Strebe und der Stellvorrichtung mit der in Wirkverbindung stehenden Federungsvorrichtung im wesentlichen gleich sind, also parallel oder relativ wenig divergieren oder konvergieren, findet zumindest ungefähr ein gleichmäßiger Kräfteangriff statt.

Es ist möglich, die Kapazität der Federungs- bzw. Dämpfungsvorrichtung den von der Radaufhängung eingeleiteten Kräften anzupassen, indem die zu der Radaufhängung führende Strebe und der Stellmotor mit unterschiedlichem Abstand zu der Schwenkachse an dem Umlenkglied angreifen.

In der Zeichnung sind zwei nachfolgend näher beschriebene Ausführungsbeispiele der Erfindung dargestellt. Es zeigt:
- Fig. 1: ein gezogenes Gerät in Seitenansicht und in schematischer Darstellung,
- Fig. 2: eine Stellvorrichtung mit Federungsvorrichtung und Dämpfungsvorrichtung in schematischer perspektivischer Darstellung,
- Fig. 3: die Stellvorrichtung nach Figur 2 in einem ersten Betriebszustand,
- Fig. 4: die Stellvorrichtung nach Figur 2 in einem zweiten Betriebszustand,
- Fig. 5: die Stellvorrichtung nach Figur 2 in einem dritten Betriebszustand,
- Fig. 6: die Stellvorrichtung nach Figur 2 in einem vierten Betriebszustand, und
- Fig. 7: ein zweites Ausführungsbeispiel einer Stellvorrichtung mit Federungsvorrichtung und Dämpfungsvorrichtung in schematischer Darstellung.

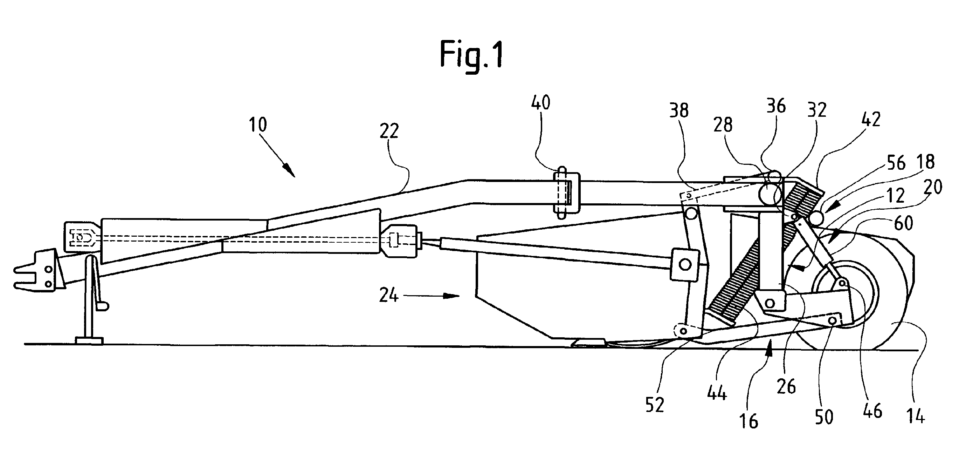

Ein gezogenes Gerät 10 gemäß Figur 1 enthält ein Fahrgestell 12, Räder 14, Radaufhängungen 16, eine Federungsvorrichtung 18, Stellvorrichtungen 20, eine Deichsel 22 und ein Arbeitsaggregat 24.

Das Gerät 10 ist in der Art eines Mähkonditionierers ausgebildet, der dazu bestimmt ist, Halmgut vom Boden zu trennen, es zu bearbeiten und auf den Boden abzulegen. Während des Betriebes wird das Gerät 10 mit relativ hoher Geschwindigkeit über unebenes Gelände gezogen und erfährt andauernd Stöße, die neben der Nachgiebigkeit der Räder 14 selbst von der Federungsvorrichtung 18 aufgefangen werden müssen. Die Erfindung ist keinesfalls auf die Anwendung bei einem solchen Gerät 10 beschränkt, sondern kann auch bei anderen gezogenen Geräte, z. B. Pressen, Bodenbearbeitungswerkzeugen, Sägeräten, Spritzgeräten und dergleichen angewandt werden.

Das Fahrgestell 12 ist im wesentlichen als ein Rahmen in der Art eines auf dem Kopf stehenden "U" mit vertikalen Schenkeln 26 und einem horizontalen Querträger 28 ausgebildet, in deren Zwischenraum das Arbeitsaggregat 24 zumindest teilweise untergebracht ist. Das Fahrgestell 12 trägt auf nachfolgend näher beschriebene Weise das Arbeitsaggregat 24 und kann mit diesem in unterschiedlich hohe Stellungen gegenüber dem Boden gebracht werden.

Im unteren Bereich jedes Schenkels 26 ist ein Rad 14 über eine Radaufhängung 16 vertikal schwenkbar angeschlossen.

Im oberen Bereich jedes Schenkels 26 befindet sich ein Halter 32. Außerdem ist an dem Querträger 28 ein Lager 36 für einen oberen Lenker 38 und ein Lager 40 für die horizontal bewegliche Aufnahme der Deichsel 22 vorgesehen. Schließlich sind an jeder Seite des Querträgers 28 Aufnehmer 42 für Federn 44 vorgesehen.

Die Räder 14 sind in herkömmlicher Weise mit luftgefüllten Reifen versehen und an dem freien Ende der Radaufhängung 16 drehbar angebracht. Das Fahrgestell 12 stützt sich mittels der Räder 14 auf dem Boden ab.

Jede Radaufhängung 16 ist in der Art einer Schwinge ausgebildet, die in einem vorderen Endbereich vertikal schwenkbar an dem Schenkel 26 angebracht ist, in einem rückwärtigen Endbereich ein Rad 14 trägt, in einem rückwärtigen oberen Bereich einen Anschluß 46 für einen Stellmotor 60 der Stellvorrichtung 20 und in einem rückwärtigen unteren Endbereich einen Anschluß 50 für einen unteren Lenker 52 aufweist. Der Stellmotor 60 kann auch als ein Teil der Radaufhängung 16 angesehen werden.

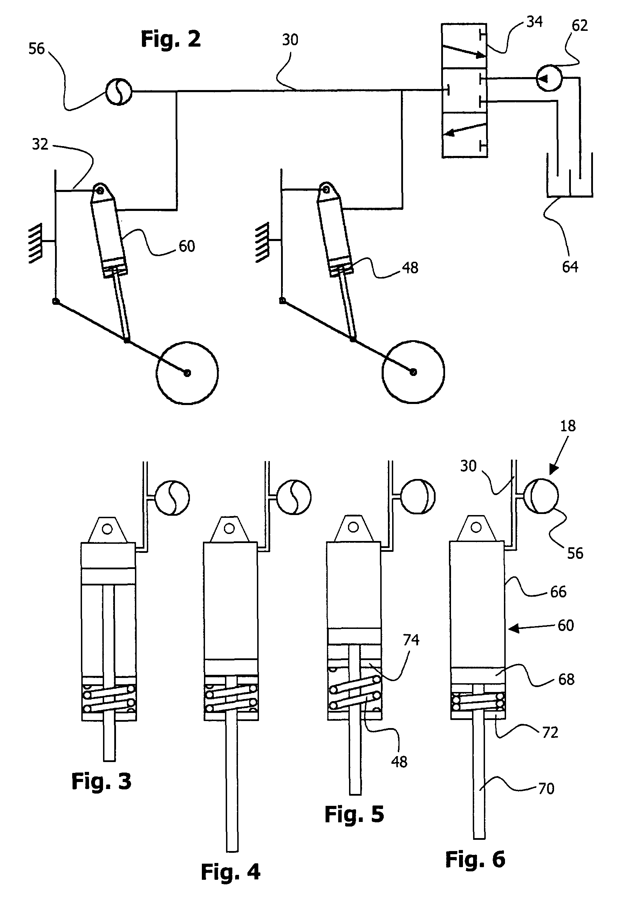

Die Federungsvorrichtung 18 enthält einen als Federelement wirkenden Gasdruckspeicher 56. Wenn auch gemäß Figur 2 der Stellvorrichtung 20 ein Gasdruckspeicher 56 für beide Stellmotoren 60 gemeinsam zugeordnet ist, so könnte auch für jeden Stellmotor 60 ein gemeinsamer Gasdruckspeicher 56 vorgesehen sein. Der Gasdruckspeicher 56 ist an eine beiden Stellmotoren 60 gemeinsame Zulaufleitung 30 angeschlossen, die in ein an sich bekanntes 3/3-Hydraulikventil 34 mündet und einen Zufluß von Druckmittel aus einer Pumpe 62 oder einen Abfluß in einen Vorratsbehälter 64 über dieses Hydraulikventil 34 ermöglicht. Das Hydraulikventil 34, die Pumpe 62 und der Vorratsbehälter 64 stehen stellvertretend für ein in der tatsächlichen Ausführung wesentlich aufwendigeres aber an sich ebenfalls bekanntes Hydrauliksystem.

Der Gasdruckspeicher 56 ist derart bemessen, daß bei ausgefahrenem Stellmotor 60 und anstehendem Systemdruck sein Gaskissen nicht zusammengedrückt ist. Ein Zusammendrücken des Gaskissens erfolgt erst, wenn das Gerät 10 mehr oder weniger abrupt auf ein Hindernis auffährt und die Stellmotoren 60 Stöße erfahren.

Die Stellvorrichtung 20 enthält den Stellmotor 60, der sich zwischen dem Halter 32 und dem Anschluß 50 in dem rückwärtigen Endbereich der Radaufhängung 16 erstreckt. Der Stellmotor 60 ist als ein einfachwirkender Hydraulikmotor ausgebildet, der zum Ausfahren unter Druck gesetzt wird. Der Stellmotor 60 wird auf herkömmliche Weise von einem nicht gezeigten Zugfahrzeug aus gesteuert, um ein Anheben bzw. Absenken des Fahrgestells 12 zu bewirken. In Figur 2 ist ein vereinfachter Hydraulikschaltplan für das bessere Verständnis dargestellt.

Die Deichsel 22 ist in ihrem rückwärtigen Endbereich in dem Lager 40 des Fahrgestells 12 horizontal schwenkbar gelagert und dient dem Anschluß des Geräts 10 an ein nicht dargestelltes Zugfahrzeug, z.B. einen Ackerschlepper.

Das Arbeitsaggregat 24 ist in der Form eines Mähwerks mit einer Gutbehandlungsvorrichtung ausgebildet, dessen Arbeitshöhe mittels der Stellvorrichtung 20 eingestellt werden kann. Die Aufhängung des Arbeitsaggregats 24 an dem Fahrgestell 12 erfolgt mittels des oberen Lenkers 38, der unteren Lenker 52 und der Federn 44, wozu entsprechende Befestigungsmittel vorgesehen sind, die nicht näher bezeichnet werden, weil sie an sich bekannt sind.

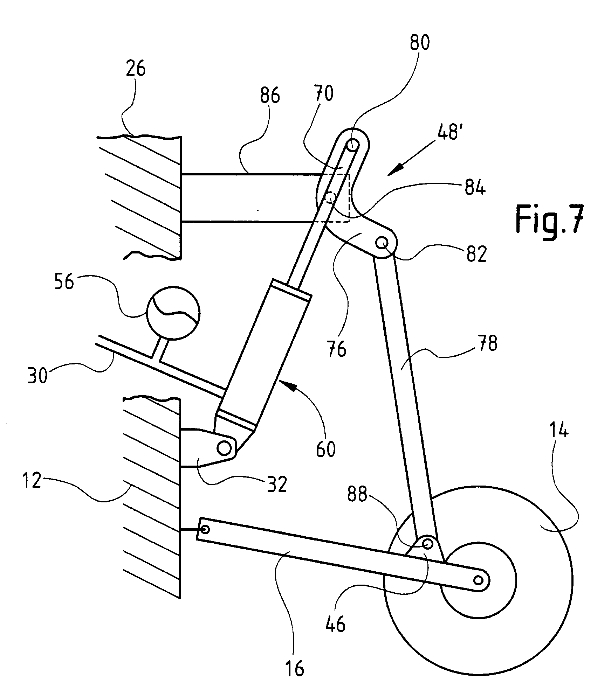

Das Gerät 10 enthält zudem eine Dämpfungsvorrichtung 48, die in den Figuren 2 bis 6 in einem ersten Ausführungsbeispiel näher gezeigt ist, während sich ein zweites Ausführungsbeispiel aus Figur 7 ergibt.

Die folgende Beschreibung bezieht sich auf die Figuren 2 bis 6, insbesondere aber auf 3 bis 6.

Gemäß der Zeichnung enthält ein Stellmotor 60 ein Zylindergehäuse 66 und einen darin gleitend beweglichen Kolben 68 mit einer Kolbenstange 70. Das Zylindergehäuse 66 ist einenends geschlossen und mit der Zulaufleitung 30 verbunden und anderenends mittels einer Platte 72 verschlossen, durch die sich die Kolbenstange 70 hindurch erstreckt. Das Zylindergehäuse 66 ist über den Halter 32 schwenkbar mit dem Fahrgestell 12 verbunden. Außer der Zulaufleitung 30 ist kein weiterer Anschluß vorhanden, sodaß der Stellmotor 60 einfachwirkend ausgebildet ist.

Die Dämpfungsvorrichtung 48 ist in dem Ausführungsbeispiel nach den Figuren 2 bis 6 als eine einfache Schraubendruckfeder ausgebildet, die sich in der Kolbenstangenkammer des Zylindergehäuses 66 zwischen dem Kolben 68 und der Platte 72 befindet und die Kolbenstange 70 mit Spiel umgibt. Auf der dem Kolben 68 zugelegenen Seite der Dämpfungsvorrichung 48 liegt eine Ringscheibe 74 auf ihr auf. Diese Ringscheibe 74 dient einer besseren Anlage der Dämpfungsvorrichtung 48 an dem Kolben 68 und weist auf dem Außenumfang eine nicht gezeigte Dichtung auf, die ihre Bewegung entlang der Innenwandung des Zylindergehäuses 66 bremst und somit verhindert, daß sich die Dämpfungsvorrichtung 48 beliebig frei bewegt und zu ungewollten Geräuschen führt. Allerdings ist die Ringscheibe 74 für die Funktion der Dämpfungsvorrichtung 48 nicht erforderlich und kann auch entfallen.

Die Figuren 3 bis 6 stellen verschiedene Betriebssituationen des Geräts 10 dar, die wie folgt beschrieben werden.

Figur 3 zeigt einen Zustand, wie er während des Mähbetriebes vorliegt, d. h. die Stellmotoren 60 sind eingefahren, der Gasdruckspeicher 56 nimmt eine neutrale Lage ein, und die Dämpfungsvorrichtung 48 ist unbelastet.

Figur 4 zeigt den Zustand, in dem die Stellmotoren 60 ausgefahren sind, um das Gerät 10 in seine Transportstellung anzuheben. Der Kolben 68 legt sich an der Dämpfungsvorrichtung 48 an und beendet seinen Hub.

Figur 5 zeigt eine Situation, in der das Gerät 10 gerade über ein Hindernis fährt und die Radaufhängung 16 einen Stoß erfährt, der nicht allein von den luftbereiften Rädern 14 aufgefangen werden kann. In diesem Fall wird das Gaskissen in dem Gasdruckspeicher 56 komprimiert, und der Kolben 68 kann sich in das Zylindergehäuse 66 hineinbewegen. Die Dämpfungsvorrichtung 48 kann, muß sich aber nicht, entspannen. Der Druck in dem Stellmotor 60 steigt wesentlich über den Systemdruck an.

Figur 6 zeigt den Zustand nachdem das Hindernis überwunden ist und der Stellmotor 60 mehr oder weniger belastet ausfahren kann, weil sich das betreffende Rad 14 nicht auf dem Boden befindet. Da sich nunmehr der Gasdruckspeicher 56 schlagartig entladen und sogar in sich einen Unterdruck erzeugen kann, schlägt der Kolben 68 auf die Dämpfungsvorrichtung 48 auf und wird dort gebremst. Eine Beschädigung der Platte 72 wird folglich vermieden.

Im folgenden wird auf das zweite Ausführungsbeispiel in Figur 7 Bezug genommen.

Figur 7 zeigt eine Dämpfungsvorrichtung 48', die ein Umlenkglied 76 und eine Strebe 78 enthält und den Gasdruckspeicher 56 umfaßt.

Diese Dämpfungsvorrichtung 48' verzichtet auf ein eigenes Dämpfungsglied und benutzt statt dessen den Gasdruckspeicher 56 aufgrund der Richtungsänderung durch das Umlenkglied 76.

Der Stellmotor 60 ist wiederum als ein einfachwirkender Hydraulikzylinder ausgebildet, wobei die Anordnung in diesem Ausführungsbeispiel so gewählt ist, daß sich das Ende des Zylindergehäuses 66 unten befindet und sich die Kolbenstange 70 nach oben erstreckt, was allerdings für die Erfindung nicht zwingend ist.

Der Halter 32 befindet sich in diesem Ausführungsbeispiel in dem unteren Endbereich des Schenkels 26.

Wenn auch nur ein Stellmotor 60 und nur ein Halter 32 dargestellt sind, so sind diese in der tatsächlichen Ausführung an jeder Seite vorgesehen.

Das Umlenkglied 76 ist als ein zweischenkliger Schwenkarm ausgebildet, der einenends ein Lager 80 für den Anschluß der Kolbenstange 70, anderenends ein Lager 82 für den Anschluß der Strebe 78 und zwischen diesen ein Lager 84 zur Aufnahme auf einem mit dem Fahrgestell 12 bzw. dessen Schenkel 26 verbundenen Halter 86 aufweist. Legt man eine Gerade durch die Lager 80 und 82, dann befindet sich das Lager 84 stets seitlich dieser Geraden, und zwar auf der dem Stellmotor 60 zugelegenen Seite. Aufgrund der Anordnung der Lager 80, 82, 84 nimmt das Umlenkglied 76 eine im wesentlichen L- oder V-förmige Gestalt ein.

Die Strebe 78 erstreckt sich zwischen einem Lager 88 an dem Anschluß 46 im rückwärtigen oberen Bereich der Radaufhängung 16 und dem Lager 82 an dem Umlenkglied 76. Die Strebe 78 kann als eine starre Stange, aber auch als ein längenveränderlicher Lenker ausgebildet sein. Bei Bedarf kann die Strebe 78 sogar mit einer Feder zur weiteren Dämpfung von Stößen versehen werden.

Der Halter 86 besteht aus einer oder mehreren gabelförmig an den Schenkel 26 angeschweißten Laschen, die seitlich oder zwischen sich das Umlenkglied 76 in seinem Lager 84 schwenkbar aufnehmen.

Nach dieser Beschreibung des Ausführungsbeispiels nach Figur 7 ergibt sich folgende Funktion.

Das Fahrgestell 12 stützt sich auf dem Boden über die Räder 14 ab, wobei seiner Abwärtsbewegung eine im wesentlichen starre Verbindung entgegenwirkt, die den schwenkbar an dem Schenkel 26 angebrachten Stellmotor 60, das Umlenkglied 76, die Strebe 78 und die Radaufhängung 16 enthält.

Abgesehen von der jedem Bauteil ohnehin inhärenten Elastizität wird lediglich durch den Gasdruckspeicher 56 eine Federung zugelassen. Demnach wird sich dessen Gaskissen mehr oder weniger verdichten, wenn die Räder 14 über einen Stein oder eine sonstige Unebenheit fahren. In einem solchen Fall wird die Radaufhängung 16 mit Blick auf Figur 7 entgegen dem Uhrzeigerdrehsinn schwenken, die Strebe 78 anheben und das Umlenkglied 76 ebenfalls entgegen dem Uhrzeigerdrehsinn um das Lager 84 schwenken. Aufgrund dieser Schwenkbewegung wird die Kolbenstange 70 in das Zylindergehäuse 66 gedrückt und komprimiert das Gaskissen in dem Gasdruckspeicher 56.

Sobald das Hindernis überwunden ist und die Kraft auf die Radaufhängung 16 nachläßt, sodaß sich der Gasdruckspeicher 56 entladen kann, wird das komprimierte Gas die Kolbenstange 70 ausfahren und das Umlenkglied 76 soweit im Uhrzeigerdrehsinn verschwenken, bis sich die Längsmittelachse der Kolbenstange 70 und eine Gerade durch die Lager 80, 84 decken. In diesem Fall hat der Kolben 68 die Platte 72 noch nicht erreicht, kann aber auch nicht weiter ausfahren. Wenn das Rad 14 und die Radaufhängung 16 weiter in dem Uhrzeigerdrehsinn schwenken können, z. B. weil das Rad 14 "in der Luft hängt", gelangt die Kolbenstange 70 mit dem Lager 80 auf die andere Seite des Lagers 84 und bewirkt nunmehr, daß die Kolbenstange 70 entgegen dem Druck in dem Gasdruckspeicher 56 nach innen gedrückt wird. Einer weiteren Abwärtsbewegung wird somit federnd entgegengewirkt.

Der Abstand des Lagers 80 zu den Lagern 82 bzw. 84 kann unterschiedlich gewählt werden, wodurch sich eine Kräftübersetzung ergibt.

## Patentansprüche

1. Gezogenes Gerät (10) mit einem Fahrgestell (12), wenigstens einer Radaufhängung (16), einer Federungsvorrichtung (18) und einer Stellvorrichtung (20), **dadurch gekennzeichnet, daß** die Radaufhängung (16) im unbelasteten Zustand einen Weg zurücklegen kann, der den Arbeitshub der Stellvorrichtung (20) überschreitet und daß in dem, dem zusätzlichen Weg entsprechenden Hubbereich, auf die Stellvorrichtung (20) eine Dämpfungsvorrichtung (48) wirkt.

2. Gezogenes Gerät nach Anspruch 1, **dadurch gekennzeichnet, daß** die Stellvorrichtung (20) ein Zylindergehäuse (66) und einen darin geführten Kolben (68) aufweist und die Dämpfungsvorrichtung (48) zwischen dem Kolben (68) und einem Ende des Zylindergehäuses (66) vorgesehen ist.

3. Gezogenes Gerät nach Anspruch 1 oder 2, **dadurch gekennzeichnet, daß** die Dämpfungsvorrichtung (48) als eine mechanische Feder, insbesondere eine Spiralfeder, Schraubendruckfeder oder Tellerfeder, als ein Gasdruckspeicher (56) oder als ein komprimierbarer gummiartiger Körper ausgebildet ist.

4. Gezogenes Gerät nach einem oder mehreren der vorherigen Ansprüche, **dadurch gekennzeichnet, daß** auf die eine Seite des Kolbens (68) die Federungsvorrichtung (18), insbesondere mittels eines Gasdruckspeichers (56), wirkt, während sich die Dämpfungsvorrichtung (48) auf der gegenüberliegenden Seite des Kolbens (68) befindet.

5. Gezogenes Gerät nach einem oder mehreren der vorherigen Ansprüche, **dadurch gekennzeichnet, daß** zwischen der Stellvorrichtung (20) und der Radaufhängung (16) ein Umlenkglied (76) mit einer Schwenkachse vorgesehen ist, wobei die Stellvorrichtung (20) mit der Dämpfungsvorrichtung (48) einerseits und die Radaufhängung 16 andererseits der Schwenkachse an dem Umlenkglied (76) schwenkbar angreift.

6. Gezogenes Gerät nach Anspruch 5, **dadurch gekennzeichnet, daß** die Radaufhängung (16) eine Strebe (78) aufweist, wobei die Haupterstreckungsrichtung der Strebe (78) und die eines Stellmotors (60) der Stellvorrichtung (20) parallel oder annähernd parallel zueinander verlaufen.

7. Gezogenes Gerät nach Anspruch 5 oder 6, **dadurch gekennzeichnet, daß** die Radaufhängung (16), insbesondere die Strebe (78) und der Stellmotor (60) mit unterschiedlichem Abstand zu der Schwenkachse an dem Umlenkglied (76) angreifen.
